# EUROPÄISCHE PATENTANMELDUNG

(11) **EP 1 396 840 A1**
(43) Veröffentlichungstag der Anmeldung: **10.03.2004**
(21) Anmeldenummer: 02018019.6
(22) Anmeldetag: 12.08.2002
(51) Int. Cl.: G10L 15/18

(54) **Verfahren zur Spracherkennung von buchstabierten Worten**

(71) Anmelder: SIEMENS AKTIENGESELLSCHAFT, 80333 München (DE)
(72) Erfinder: Lukas, Klaus, 81739 München (DE); Steinmassl, Guenter, 82335 Berg (DE)

(57) **Zusammenfassung**

Die Erfindung betrifft ein Spracherkennungsverfahren für eine buchstabierte Spracheingabe eines Wortes, bei dem das Wort als Buchstabenfolge buchstabiert eingegeben wird.

Einzelne Buchstaben sowie charakteristische Buchstabenfolgen eines Alphabets werden anhand des jeweiligen phonetischen Klanges jeweils einer Buchstabengruppe zugeordnet, wobei jede Buchstabengruppe eine eigene Gruppenkennung aufweist. Die Buchstabenfolge des Wortes wird anhand des phonetischen Klanges der Buchstaben in eine Gruppenkennungsfolge umgesetzt und einem Gruppenerkenner zugeführt. Anhand eines Vokabulars und anhand von Übergangswahrscheinlichkeiten, dass einem ersten Buchstaben einer Buchstabengruppe ein bestimmter weiterer Buchstabe nachfolgt, werden mit Hilfe des Gruppenerkenners die Buchstaben der Buchstabenfolge schrittweise erkannt.

## Beschreibung

Die Erfindung betrifft ein Spracherkennungsverfahren für eine buchstabierte Spracheingabe eines Wortes.

Spracherkennungsverfahren werden bei sprachgesteuerten Textverarbeitungen im Büro, im privaten Einsatz und für Steuerungen von technischen Geräten verschiedener Art verwendet.

Für einen praktischen Einsatz von Spracherkennungsverfahren ist eine wirksame und flexible Adaption auf einen Sprecher bzw. Anwender von hoher Bedeutung. Besonders hohe Anforderungen stellen Spracherkennungsverfahren, die von verschiedenen Anwendern benutzt werden. Derartige Spracherkennungsverfahren verwenden "Hidden-Markov-Modelle" (HMM), bei denen zu erkennende Wörter als Ketten von Zuständen moduliert und mit vorgegebenem Sprachdatenmaterial trainiert werden.

Es sind Spracherkennungsverfahren bekannt, die ausschließlich auf einen speziellen Anwender adaptiert werden. Dabei werden diktierte Worteingaben des Anwenders erkannt, in einen Text umgesetzt und im Anschluss daran Fehler manuell korrigiert. Bei steigender Verwendung des Spracherkennungsverfahrens wird dieses durch die Fehlerkorrektur auf den speziellen Anwender immer besser angepasst, bzw. für ihn optimiert. Derartige Spracherkennungsverfahren werden oft im sogenannten "Embedded"-Bereich verwendet, zu dem beispielsweise mobile Funkkommunikationsendgeräte gezählt werden.

Spracherkennungsverfahren mit einer Möglichkeit zur buchstabierten Eingabe hingegen, die für mehrere unbekannte Anwender verwendet werden sollen, werden aufgrund ihrer Rechenintensivität derzeit in der Regel auf Servern betrieben und sind somit sehr kostenintensiv. Ein vom Sprecher abhängiges Spracherkennungsverfahren ist hier nicht oder nur begrenzt einsetzbar. Als Anwendungsbeispiel sei hier eine Anrufweiterschaltung bei Banken, Versicherungen bzw. Telefonzentralen genannt. Beispielsweise ruft ein unbekannter Anwender eine automatisierte Telefonzentrale an und wird aufgrund von ihm gesprochener Kennzahlen wunschgemäß weitervermittelt.

Bei einer Spracheingabe eines Wortes oder bei einer buchstabierten Spracheingabe des Wortes ist eine korrekte Spracherkennung von phonetisch ähnlich klingenden Buchstabenfolgen bzw. Einzelbuchstaben nur mit größerem Aufwand zu realisieren. Im Deutschen werden beispielsweise die Buchstaben "B", "C", "D" bzw. "E" phonetisch ähnlich als "B", "Ce", "De" bzw. "Ee" ausgesprochen. Für viele Spracherkennungsverfahren, die im allgemeinen zur Umsetzung eines gesprochenen Wortes in einen geschriebenen Text verwendet werden, sind Zusammenhänge bzw. Unterschiede zwischen derartigen Buchstabenfolgen bzw. zwischen Einzelbuchstaben deshalb nicht ohne weiteres erkennbar.

Zur Verbesserung dieser Situation wird ein von einem Anwender gesprochenes ganzes Wort in einem ersten Durchgang durch ein Spracherkennungsverfahren analysiert. Im Bedarfsfall wird in einem zweiten Durchgang vom Anwender eine buchstabierte Eingabe dieses Worts verlangt und die einzelnen Buchstaben mit Hilfe eines weiteren Spracherkennungsverfahrens erneut analysiert. Durch Quervergleich wird eine Erkennung des Worts ermöglicht. Als Beispiel seien hier die Namen "Meier", "Maier", "Meyer" und "Mayer" angeführt, die phonetisch nicht unterscheidbar sind, weil die Buchstabenfolgen "ei", "ai", "ey" und "ay" phonetisch gleichklingend als "ei" ausgesprochen werden. Erst beim der buchstabierten Spracheingabe des Namens "M-e-i-e-r" kann der Name korrekt erkannt werden.

Bei mobilen Kommunikationsendgeräten, wie beispielsweise bei den "Handy's" oder "Mobiles" bzw. bei den "Persönlichen Digitalen Assistenten", kurz "PDA", werden aufgrund von Ressourcen- und Plattformrestriktionen Spracherkennungsverfahren verwendet, bei denen eingeschränkte Vokabulare bzw. Befehlsketten erkannt werden. Eine Vergrößerung des Vokabulars führt zur Verschlechterung einer Spracherkennungsleistung.

Aufgabe der vorliegenden Erfindung ist es daher, ein Spracherkennungsverfahren zu entwickeln, mit dessen Hilfe bei einer buchstabierten Worteingabe phonetisch ähnlich klingende Buchstaben bzw. Buchstabenfolgen mit geringem Aufwand richtig erkannt werden.

Die Aufgabe der Erfindung wird durch die Merkmale des Anspruchs 1 gelöst. Vorteilhafte Weiterbildungen der Erfindung sind in den Unteransprüchen angegeben.

Mit Hilfe des erfindungsgemäßen Spracherkennungsverfahrens sind bei einem kleinem Erkennervokabular (hier Buchstaben) große Ergebnisräume (hier Wörter) für die Spracherkennung möglich.

Das erfindungsgemäße Spracherkennungsverfahren basiert auf einer hierarchischen Strukturierung und Zuordnung von Buchstaben bzw. Buchstabenfolgen in phonetisch ähnlich klingende Buchstabengruppen. Eine Zuordnung von diktierten Buchstaben zu den entsprechenden phonetisch ähnlich klingenden Buchstabengruppen erfolgt mit Hilfe einer Erkennerstufe.

Zwischen den Buchstabengruppen wird erfindungsgemäß durch übergangswahrscheinlichkeiten eine hierarchische Struktur vorgegeben. Diese hierarchische Struktur ist jedoch auch bei einem vorgegebenen Wortschatz direkt aus diesem ableitbar.

Erfindungsgemäß wird ein zweistufiger Erkennungsalgorithmus verwendet, der die Übergangswahrscheinlichkeiten der Buchstabengruppen berücksichtigt. Die Übergangswahrscheinlichkeit repräsentiert dabei die Wahrscheinlichkeit, dass einem Buchstaben einer ersten Buchstabengruppe ein Buchstabe einer zweiten Buchstabengruppe nachfolgt.

Das erfindungsgemäße Spracherkennungsverfahren hat aufgrund des geringen Aufwands, beispielsweise bei der Hardware, große Bedeutung für Kommunikationsendgeräte im Embedded-Bereich, im speziellen bei Funkkommunikationsendgeräten wie Handy's bzw. bei den "Persönlichen digitalen Assistenten", kurz "PDA".

Durch das erfindungsgemäße Spracherkennungsverfahren wird eine insgesamt höhere diskriminative Erkennungsrate erzielt, als es bei einer herkömmlichen buchstabenorientierten Spracherkennung bisher möglich ist.

Im Folgenden wird ein Ausführungsbeispiel der Erfindung anhand einer Zeichnung näher erläutert. Dabei zeigt:
- FIG 1: eine anhand ihres phonetischen Klangs erfolgende Zuordnung von Buchstaben und Buchstabenfolgen zu Buchstabengruppen gemäß der Erfindung, und
- FIG 2: bezugnehmend auf FIG 1 eine schematische Darstellung des erfindungsgemäßen Spracherkennungsverfahrens.

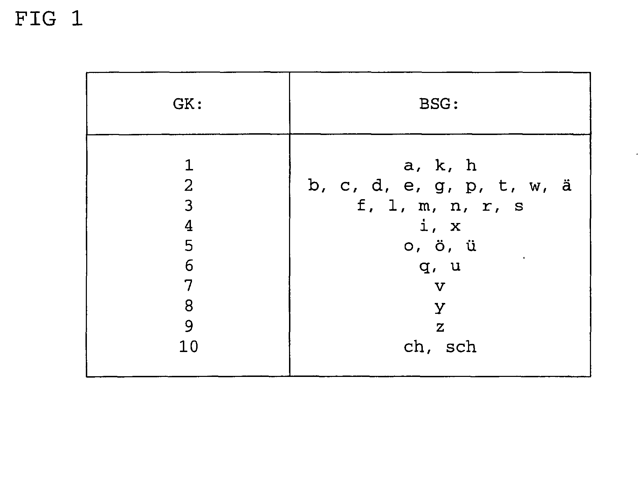

FIG 1 zeigt eine anhand ihres phonetischen Klanges erfolgende Zuordnung von Buchstaben und Buchstabenfolgen zu Buchstabengruppen BSG gemäß der Erfindung.

Jeder einzelnen der Buchstabengruppen BSG wird eine spezifische Gruppenkennung GK zugewiesen. Einer ersten Buchstabengruppe BSG mit einer ersten Gruppenkennung GK=1 werden die im Deutschen phonetisch ähnlich klingenden Buchstaben "a", "k" und "h" (gesprochen "aa", "ka" und "ha") zugewiesen. Einer zweiten Buchstabengruppe BSG mit einer zweiten Gruppenkennung GK=2 werden die im Deutschen phonetisch ähnlich klingenden Buchstaben "b", "c", "d", "e", "g", "p", "t", "w" und "ä" (gesprochen "be", "ce", ..., "we" und "äh") zugewiesen.

Die sinngemäße Zuweisung von weiteren phonetisch ähnlich klingenden Buchstaben zu einer durch eine Gruppenkennung GK markierten Buchstabengruppen BSG ist der FIG 1 entsprechend zu entnehmen.

Als Besonderheit sei hier auf die Buchstabengruppe BSG mit der Gruppenkennung GK=10 hingewiesen, der die Buchstabenfolgen "ch" und "sch" zugewiesen wurden.

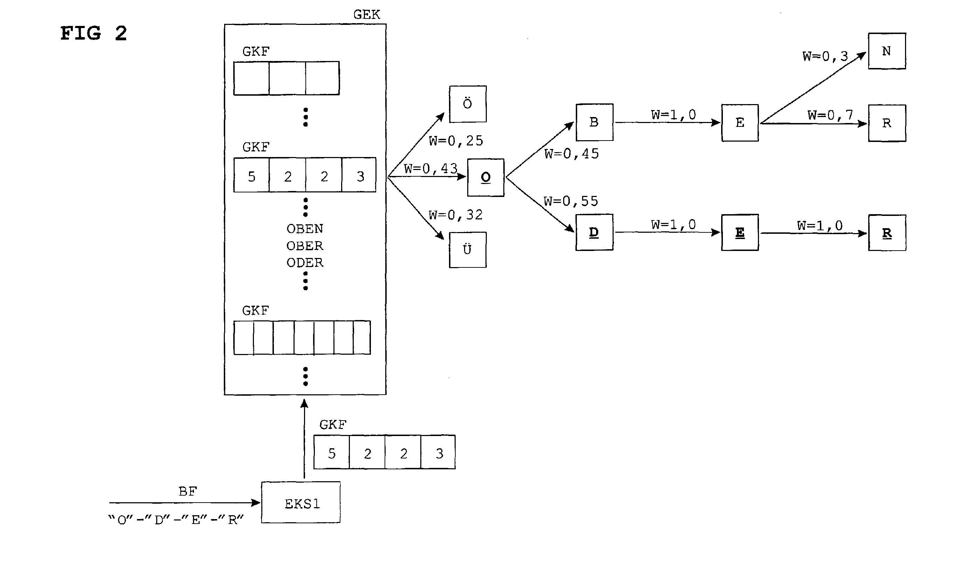

FIG 2 zeigt bezugnehmend auf FIG 1 eine schematische Darstellung des erfindungsgemäßen Spracherkennungsverfahrens.

Es soll ein Wort "ODER" erkannt werden, das von einem Anwender buchstabiert als "O" - "D" - "E" - "R" eingegeben wird und die Buchstabenfolge BF bildet.

Aufgrund ihrer phonetischen Ähnlichkeiten zu einer der in FIG1 vorgegebenen Buchstabengruppen BSG wird in einer ersten Stufe jeder einzelne diktierte Buchstabe jeweils einer der Buchstabengruppen BSG mit Hilfe einer ersten Erkennerstufe EKS1 entsprechend zugeordnet.

Der Buchstabe "O" wird der Buchstabengruppe BSG mit der Gruppenkennung GK=5, der Buchstabe "D" wird der Buchstabengruppe BSG mit der Gruppenkennung GK=2, der Buchstabe "E" wird der Buchstabengruppe BSG mit der Gruppenkennung GK=2 und der Buchstabe "R" wird der Buchstabengruppe BSG mit der Gruppenkennung GK=3 zugeordnet. Somit entsteht eine Gruppenkennungsfolge GKF mit "5-2-2-3", bei der die richtige Zuordnung der einzelnen Buchstaben zur jeweils entsprechenden Buchstabengruppe BSG mit hoher Wahrscheinlichkeit, bzw. eine hohe Erkennungsrate, gewährleistet ist.

In einer zweiten Stufe wird die Gruppenkennungsfolge GKF in einem dedizierten Gruppenerkenner GEK zugeführt. Dieser ist beispielsweise als speziell diskriminativ trainierter Spracherkenner für die einzelnen Buchstabengruppen BSG und deren diskriminatorischen Ausprägungen ausgeführt. Dadurch ist auch hier eine hohe Erkennungsrate gewährleistet.

Der Gruppenerkenner GEK umfasst als Vokabular unter anderem diejenigen Wörter, deren Gruppenkennungsfolgen GKF der ermittelten Gruppenkennungsfolge GKF = "5-2-2-3" entsprechen. Hier seien beispielhaft die Wörter "OBEN", "OBER" und "ODER" genannt, die alle drei der Gruppenkennungsfolge GKF = "5-2-2-3" zugeordnet sind.

Weiter sind beim Gruppenerkenner GEK auch die Wahrscheinlichkeiten bzw. Übergangswahrscheinlichkeiten bekannt, dass einem Buchstaben einer ersten Buchstabengruppe BSG ein Buchstabe einer zweiten Buchstabengruppe BSG nachfolgt.

Beim vorliegenden Beispiel ermittelt der Gruppenerkenner GEK dafür, dass die zu erkennende Buchstabenfolge BF mit einem "Ö" beginnt, eine Wahrscheinlichkeit W=0,25, während die Wahrscheinlichkeit dafür, dass die Buchstabenfolge BF mit einem "Ü" beginnt, mit W=0,32 bewertet wird. Mit größter Wahrscheinlichkeit beginnt die Buchstabenfolge BF jedoch mit einem "O", bewertet mit W=0,43.

Basierend auf dieser Entscheidung können im folgenden alle Zweige, deren Buchstabenfolgen BF mit "Ö" bzw. "Ü" beginnen würden, vernachlässigt werden, was zu einer beträchtlichen Vereinfachung beim erfindungsgemäßen Spracherkennungsverfahren führt.

Mit Hilfe des Gruppenerkenners GEK, der zur Erkennung bzw. Unterscheidung von Buchstaben einer gemeinsamen Buchstabengruppe BSG optimiert ist, wird nun anhand der Wahrscheinlichkeiten ermittelt, dass der dem ersten Buchstaben "O" nachfolgende zweite Buchstabe mit einer Wahrscheinlichkeit von W=0,55 der Buchstabe "D" ist. Bei einer derartigen Folge ist der dem Buchstaben "D" nachfolgende weitere Buchstabe mit einer Wahrscheinlichkeit von W=1 (=100%) als Buchstabe "E" anzusehen. Abschließend wird der Buchstabe "R" mit einer Wahrscheinlichkeit von W=1 ermittelt und somit die Buchstabenfolge BF = "O-D-E-R" bzw. das Wort "ODER" fehlerfrei erkannt.

Wäre hingegen als Buchstabenfolge BF = "O-B-E-R" zu ermitteln, so würde mit Hilfe des Gruppenerkenners GEK der Buchstabe "B" als Nachfolgebuchstabe des Buchstaben "O" mit einer entsprechend höheren Wahrscheinlichkeit W ermittelt werden. Als Wahrscheinlichkeit W, dass dem Buchstaben "E" der Buchstabe "R" nachfolgt, ist W=0,7 festgelegt.

Die Wahrscheinlichkeiten W werden entweder mit Hilfe des auf die Erkennung von Buchstaben optimierten Gruppenerkenners GEK ermittelt, oder die Wahrscheinlichkeiten W sind durch eine Begrenzung des Vokabulars beim Gruppenerkenner GEK inhärent vorgegeben.

Erfindungsgemäß wird eine "unscharfe" gruppenorientierte erste Erkennungsstufe EKS1 mit einer nachfolgenden "selektiven" Erkennungsstufe (Gruppenerkenner GEK) miteinander kombiniert und das erfindungsgemäße Spracherkennungsverfahren mit Hilfe von hierarchisch strukturierten Übergangswahrscheinlichkeiten realisiert.

Bei buchstabierten Spracheingaben treten erfahrungsgemäß am Anfang und/oder am Ende der Buchstabenfolge BF oft Fehler auf, so dass eine erste erweiterte Buchstabenfolge BFE1 = "5-**5**-2-2-3" bzw. eine zweite erweiterte Buchstabenfolge BFE2 = "5-2-2-**3**-3" ergänzend zur Buchstabenfolge BF = "5-2-2-3" analysiert wird.

## Patentansprüche

1. Spracherkennungsverfahren für ein buchstabiert eingegebenes Wort, das eine Buchstabenfolge (BF) bildet,
- bei dem jeder einzelne Buchstabe der Buchstabenfolge (BF) anhand seines phonetischen Klangs jeweils einer Buchstabengruppe (BSG) mit einer Gruppenkennung (GK) zugeordnet und aus den einzelnen Gruppenkennungen (GK) eine Gruppenkennungsfolge (GKF) gebildet wird, und
- bei dem anhand der Gruppenkennungsfolge (GKF) und anhand von ermittelten Wahrscheinlichkeiten (W), die aufeinanderfolgende Buchstaben untereinander aufweisen, die Buchstabenfolge (BF) erkannt wird.

2. Spracherkennungsverfahren nach Anspruch 1, bei dem phonetisch ähnlich klingende Buchstaben und Buchstabengruppen eines Alphabets jeweils einer Buchstabengruppe (BSG) zugeordnet werden.

3. Spracherkennungsverfahren nach Anspruch 1 oder 2, bei dem die Zuordnung der Buchstaben der Buchstabenfolge (BF) zu den Buchstabengruppen (BSG) mit Hilfe einer ersten Erkennerstufe (EKS1) erfolgt, die die Gruppenkennungsfolge (GKF) bildet.

4. Spracherkennungsverfahren nach Anspruch 1 oder 3, bei dem die Gruppenkennungsfolge (GKF) einem Gruppenerkenner (GEK) zugeführt wird.

5. Spracherkennungsverfahren nach Anspruch 4, bei dem der Gruppenerkenner (GEK) die Gruppenkennungsfolge (GKF) mit Gruppenkennungsfolgen (GKF) eines vorgegebenen Vokabulars vergleicht und anhand von Wahrscheinlichkeiten (W), dass einem ersten Buchstaben einer Buchstabengruppe (BSG) ein bestimmter zweiter Buchstabe nachfolgt, die einzelnen Buchstaben der Buchstabenfolge (BF) schrittweise ermittelt.
